# EUROPÄISCHE PATENTANMELDUNG

(11) **EP 4 438 153 A1**
(43) Veröffentlichungstag der Anmeldung: **02.10.2024**
(21) Anmeldenummer: 24161449.4
(22) Anmeldetag: 05.03.2024
(51) Int. Cl.: B01D 33/17, B01D 33/46, C02F 11/121, F26B 17/22

(54) **SIEBTELLER, VORRICHTUNG ZUM ENTWÄSSERN VON SCHLAMM SOWIE VERWENDUNG EINES SIEBTELLERS**

(30) Priorität: 14.03.2023 DE 102023106346
(71) Anmelder: Huber SE, 92334 Berching (DE)
(72) Erfinder: Blomenhofer, Walter, 92334 Berching/Pollanten (DE)
(74) Vertreter: Canzler & Bergmeier Patentanwälte Partnerschaft mbB

(57) **Zusammenfassung**

Die Erfindung betrifft einen Siebteller (1) für eine Vorrichtung (2) zum Entwässern von Schlamm (17), mit einem Siebblech (3), das eine Vielzahl von Öffnungen (4) für den Durchtritt von Flüssigkeit (18) aufweist und im Wesentlichen kreisförmig ausgebildet ist. Erfindungsgemäß weist der Siebteller (1) eine Tragstruktur (5) zum Tragen und/oder Versteifen des Siebblechs (3) auf, wobei die Tragstruktur (5) wenigstens einen Ringabschnitt (6) umfasst. Des Weiteren betrifft die Erfindung eine Vorrichtung (2) zum Entwässern von Schlamm (17) sowie eine Verwendung eines Siebtellers (1).

## Beschreibung

Die vorliegende Erfindung betrifft einen Siebteller für eine Vorrichtung zum Entwässern von Schlamm, mit einem Siebblech, das eine Vielzahl von Öffnungen für den Durchtritt von Flüssigkeit aufweist und im Wesentlichen kreisförmig ausgebildet ist. Zudem betrifft die Erfindung eine Vorrichtung zum Entwässern von Schlamm sowie eine Verwendung eines Siebtellers.

Aus der EP 1 194 383 A1 ist eine Vorrichtung zum Entwässern von Schlamm, insbesondere Dünnschlämmen, die beispielsweise beim Betrieb von Kläranlagen anfallen, mittels einer Siebfläche zur Aufnahme des Schlammes, offenbart. Die Siebfläche besitzt Öffnungen für den Durchtritt von Flüssigkeit, wobei die Siebfläche im Wesentlichen kreisförmig ausgebildet ist und um eine senkrecht zur Siebfläche verlaufende Achse drehbar ist. Die Siebfläche besteht vorzugsweise aus einer Trägerfläche, die mit einem Sieb belegt ist. Der Nachteil ist hierbei, dass das Sieb meist als Bespannung ausgebildet ist, wodurch die Fertigung kompliziert ist. Auch können dadurch erhöhte Fertigungskosten entstehen. Zudem sind derartige Bespannungen meist sehr feinmaschig, wodurch der Durchsatz durch die Siebfläche reduziert ist.

Aufgabe der vorliegenden Erfindung ist es, die aus dem Stand der Technik bekannten Nachteile zu beseitigen.

Die Aufgabe wird gelöst durch einen Siebteller, eine Vorrichtung zum Entwässern von Schlamm sowie eine Verwendung eines Siebtellers mit den Merkmalen der unabhängigen Patentansprüche.

Vorgeschlagen wird ein Siebteller für eine Vorrichtung zum Entwässern von Schlamm, mit einem Siebblech, das eine Vielzahl von Öffnungen für den

Durchtritt von Flüssigkeit aufweist und im Wesentlichen kreisförmig ausgebildet ist.

Die Vorrichtung zum Entwässern von Schlamm ist vorzugsweise als Scheibeneindicker ausgebildet. Diese werden häufig zur Aufbereitung von Abwässern, insbesondere in Kläranlagen, verwendet. Scheibeneindicker haben den Vorteil, dass diese platzsparend und einfach ausgebildet sind. Insbesondere ist ein derartiger Scheibeneindicker für Dünnschlämme und/oder konditionierte Schlämme gut geeignet, da eine kompakte und/oder kostengünstige Gestaltung möglich ist.

Zum Entwässern des Schlamms weist die Vorrichtung den Siebteller auf, der vorzugsweise in einem Behälter der Vorrichtung angeordnet ist. Hierbei wird vorzugsweise oberhalb des Siebblechs der Schlamm angeordnet bzw. aufgebracht, wodurch die natürliche Schwerkraft zur Entwässerung des Schlammes ausgenutzt werden kann. Zusätzlich oder alternativ kann wenigstens eine Walze und/oder eine Schikane den Schlamm derart komprimieren und/oder umschichten, dass ein ungehinderter Flüssigkeitsabfluss stets gewährleistet ist. Durch die Öffnungen des Siebblechs kann die Flüssigkeit, insbesondere das Wasser, abfließen und/oder unterhalb des Siebblechs aufgefangen werden. Vorzugsweise dreht sich im bestimmungsgemäßen Gebrauch der Vorrichtung der Siebteller innerhalb des Behälters um eine Drehachse.

Erfindungsgemäß weist der Siebteller eine Tragstruktur zum Tragen und/oder Versteifen des Siebblechs auf, wobei die Tragstruktur wenigstens einen Ringabschnitt umfasst. Als Siebblech ist ein im Wesentlichen kreisförmiges Blech zu verstehen, das eine gewisse Steifigkeit gegen Durchbiegung aufweist. Bei dem Wesentlichen kreisförmigen Blech ist somit die äußere Kontur kreisförmig bzw. rund ausgebildet. Innerhalb dieser kreisförmigen bzw. runden weist das Siebblech eine im Wesentlichen konstante Blechdicke auf. Da das Siebblech Öffnungen umfasst, kann es ebenso Lochblech genannt werden. Diese Öffnungen durchbrechen die im Wesentlichen konstante Wandstärke im Wesentlichen normal zur Blechoberfläche. Meist wird das Siebblech mittig, also im Bereich der Drehachse, und/oder außenseitig, also an dessen Umfang, gehalten bzw. in der Vorrichtung abgestützt. Zusätzlich oder alternativ kann das Siebblech an den Ringabschnitten und/oder an der Tragstruktur gehalten bzw. in der Vorrichtung abgestützt werden.

Je nach Blechdicke, Lochteilung und/oder Maschenweite kann das Siebblech jedoch instabil werden. Zwar wird der Begriff Maschenweite meist für ein Quadrat- oder Rechteckmaschengewebe verwendet, jedoch ist er im gleichen Sinne für runde Öffnungen anzuwenden. Passender werden hierbei jedoch die Begriff Lochteilung und Lochung verwendet. Als Lochteilung versteht man den Mittenabstand von zwei benachbarten Löchern oder Lochreihen im Siebblech zueinander. Als Lochung ist die Größe bzw. der Durchmesser der Öffnungen zu verstehen. Allgemein gilt, dass, je größer die Öffnungen und/oder je geringer der Abstand, desto instabiler wird das Siebblech. Jedoch sind die genannten Größen meist voneinander abhängig. So ist meist bei kleineren Öffnungen auch der Abstand zueinander geringer, wodurch Lochbleche mit kleineren Öffnungen meist eine geringere Stabilität aufweisen als Lochbleche mit größeren Öffnungen. Jedoch haben Lochbleche mit kleineren Öffnungen den Vorteil, dass auf eine zusätzliche Bespannung mit einem Maschengewebe verzichtet werden kann. Derartige Maschengewebe haben den Nachteil, dass ein zusätzlicher Fertigungsschritt und eine zusätzliche Tragkonstruktion, z.B. ein Lochblech mit großen Öffnungen, notwendig ist, was die Fertigungskosten erhöht. Zudem haben derartige Maschengewebe eine sehr geringe Maschenweite, was den Durchsatz, also die durchlaufende Flüssigkeitsmenge pro Zeiteinheit, reduziert. Auch kann die Lebensdauer des Maschengewebes reduziert sein.

Mit Hilfe der Tragstruktur kann das Siebblech gestützt, getragen und/oder versteift werden. So können auch Siebbleche mit einer sehr begrenzten Stabilität, die jedoch einen hohen Durchsatz aufweisen, verwendet werden. Die notwendige Stabilität wird hauptsächlich durch die Tragstruktur mit dem wenigstens einen Ringabschnitt gewährleistet. Dadurch kann eine Wellenbildung bzw. eine lokale Durchbiegung des Siebblechs vermieden werden.

Als Ringabschnitt ist dabei ein Abschnitt der Tragstruktur zu verstehen, der sich zumindest teilweise quer zu einer Radialrichtung des Siebblechs erstreckt. Die Radialrichtung erstreckt sich radial von der Mitte des Siebblechs zu dessen Außenseite. Dadurch kann die Stabilität quer zu der Radialrichtung erhöht werden. Zudem kann dadurch eine zumindest teilweise quer zur Radialrichtung verlaufende Auflagefläche für das Siebblech geschaffen werden, wodurch das Siebblech gleichmäßig abgestützt wird.

Vorteilhaft ist es, wenn der wenigstens eine Ringabschnitt oder eine Mehrzahl aneinander angereihte Ringabschnitte wenigstens einen Versteifungsring ausbildet bzw. ausbilden. Der Versteifungsring ist somit um die Drehachse im Wesentlichen umlaufend ausgebildet. Dadurch kann die Stabilität weiter erhöht werden.

Zusätzlich oder alternativ weist der Versteifungsring die Form eines Kreises oder eines, insbesondere regelmäßigen, Polygons auf. Da das Siebblech ebenfalls im Wesentlichen kreisförmig ausgebildet ist, kann mittels des wenigstens einen kreisförmigen Versteifungsrings und/oder mehreren kreisförmigen Versteifungsringen das Siebblech möglichst gleichmäßig und/oder zur Form passend abgestützt werden. Ebenfalls kann der als regelmäßiges Polygon ausgebildeter Versteifungsring, je nach Anzahl der Ecken, eine ähnliche bzw. identische Abstützung gewährleistet werden. Darüber hinaus ist es möglich, dass Versteifungsringe mit der Form eines regelmäßigen Polygons reduzierte Herstellungskosten aufweisen.

Zusätzlich oder alternativ ist der Versteifungsring endlos ausgebildet. Als endlos ist hierbei ebenfalls der Versteifungsring zu verstehen, der an vorhandenen Enden (bspw. nach einem Biegeprozessschritt) zu dem endlosen Versteifungsring gefügt wird. Der endlose bzw. geschlossene Versteifungsring hat insbesondere für eine möglicherweise auftretende Torsion um die Drehachse eine sehr hohe Steifigkeit.

Des Weiteren ist es vorteilhaft, wenn der wenigstens eine Ringabschnitt und/oder der wenigstens eine Versteifungsring konzentrisch um eine Drehachse des Siebtellers verläuft. Da sich der Siebteller mit dem Siebblech im bestimmungsgemäßen Gebrauch der Vorrichtung um die Drehachse dreht, ermöglicht die konzentrische Ausgestaltung des wenigstens einen Versteifungsrings eine gleichmäßige Abstützwirkung. Zudem kann so eine Unwucht ausgeschlossen bzw. reduziert werden.

Auch ist es vorteilhaft, wenn die Tragstruktur wenigstens einen Radialabschnitt umfasst, wobei sich der Radialabschnitt, vorzugsweise im Wesentlichen gerade, entlang einer Radialrichtung des Siebtellers erstreckt. Der wenigstens eine Radialabschnitt versteift das Siebblech zusätzlich zum Ringabschnitt.

Vorteilhaft ist es, wenn der wenigstens eine Ringabschnitt und der wenigstens eine Radialabschnitt an einem Verbindungsabschnitt miteinander verbunden sind. Da der wenigstens eine Ringabschnitt quer zur Radialrichtung verläuft, treffen der wenigstens eine Ringabschnitt und der wenigstens eine Radialabschnitt an dem Verbindungsabschnitt vorteilhafterweise aufeinander. Vorzugsweise werden der wenigstens eine Ringabschnitt und der wenigstens eine Radialabschnitt am Verbindungsabschnitt miteinander verbunden, so dass eine miteinander verbundene Tragstruktur gebildet ist. Dies schafft eine möglichst hohe Stabilität entlang der Radialrichtung und quer zur Radialrichtung.

Vorteile bringt es zudem mit sich, wenn der wenigstens eine Ringabschnitt und/oder der wenigstens eine Radialabschnitt einen konstanten Querschnitt aufweist. So können die Herstellungskosten reduziert werden. Beispielsweise ist es dadurch vorstellbar, dass der wenigstens eine Ringabschnitt und der wenigstens eine Radialabschnitt aus dem gleichen, vorzugsweise strangförmigen, Ausgangsmaterial hergestellt wird. So ist es vorstellbar, das strangförmige Material in die passende Länge zuzuschneiden und für den Radialabschnitt gerade zu belassen bzw. auszubilden. Für den Ringabschnitt kann das strangförmige Material kreisförmig gebogen und/oder gerade abschnittsweise gefügt werden, so dass der Versteifungsring entsteht.

Beispielsweise kann bei dem Siebteller, der vorzugsweise einen Durchmesser von 1000 mm bis 2000 mm, vorzugsweise 1400 mm bis 1700 mm, aufweist, der wenigstens eine Ringabschnitt und/oder der wenigstens eine Radialabschnitt den Querschnitt mit einer konstanten Abschnittshöhe im Bereich von 20 mm bis 40 mm, vorzugsweise 25 mm bis 35 mm, und einer konstante Abschnittsbreite im Bereich von 5 mm bis 15 mm, vorzugsweise 7 mm bis 12 mm, aufweisen. Das Siebblech hat dabei beispielsweise eine Blechstärke im Bereich von 0,5 mm bis 1,2 mm, vorzugsweise 0,7 mm bis 1 mm.

Des Weiteren ist es vorteilhaft, wenn der wenigstens eine Ringabschnitt und der wenigstens eine Radialabschnitt jeweils wenigstens eine korrespondierend ausgebildete Verbindungsaussparung umfassen, so dass der wenigstens eine Ringabschnitt und der wenigstens eine Radialabschnitt im Bereich der korrespondierenden Verbindungsaussparungen ineinander einschiebbar sind und den Verbindungsabschnitt ausbilden. Die jeweiligen Verbindungsaussparungen sind dabei vorzugsweise derart ausgebildet, dass diese jeweils den halben Querschnitt des wenigstens einen Ringabschnitts und des wenigstens einen Radialabschnitts aussparen. Dadurch können sowohl der wenigstens eine Ringabschnitt, als auch der wenigstens eine Radialabschnitt ununterbrochen bzw. endlos ausgebildet sein. Dadurch werden diese geringstmöglich vom Verbindungsabschnitt geschwächt. Auch kann dadurch die Fertigung erleichtert bzw. beschleunigt werden, da diese nur ineinander eingeschoben werden müssen. Zusätzlich oder alternativ können der wenigstens eine Ringabschnitt und der wenigstens eine Radialabschnitt im Bereich der Verbindungsaussparungen beispielsweise durch eine Schweißverbindung, miteinander verbunden werden.

Vorteilhaft ist es zudem, wenn der wenigstens eine Ringabschnitt und der wenigstens eine Radialabschnitt, insbesondere verschiebefest, miteinander verbunden sind. Die so gebildete Tragstruktur mit den verschiebefest verbundenen Ringabschnitt(en) und Radialabschnitt(en) gewährleistet eine sehr hohe Stabilität bei möglichst geringem Gewicht.

Ebenso bringt es Vorteile mit sich, wenn die Tragstruktur mehrere Versteifungsringe umfasst, die entlang der Radialrichtung, insbesondere gleichmäßig, voneinander beabstandet sind. So kann eine gleichmäßige Stützwirkung bzw. Versteifungswirkung der Tragstruktur erzielt werden.

Auch ist es vorteilhaft, wenn die Tragstruktur mehrere Radialabschnitte umfasst, wobei die Radialabschnitte, vorzugsweise gleichmäßig, um einen Winkel zueinander versetzt angeordnet sind. Auch dies trägt zur gleichmäßigen Stützwirkung bzw. Versteifungswirkung der Tragstruktur bei. Beispielsweise kann eine derartige Tragstruktur spinnennetzartig ausgebildet sein.

Vorteile bringt es mit sich, wenn das Siebblech mehrteilig, insbesondere zweiteilig, ausgebildet ist. Die beiden Siebblechhälften oder die mehreren Siebblechabschnitte tragen zu einer einfacheren Herstellung des Siebtellers bei, da die Größe des Siebblechs aufgeteilt ist.

Vorteilhaft ist es, wenn das Siebblech eine Lochteilung im Bereich von 0,5 mm bis 4 mm, vorzugsweise von 1 mm bis 3 mm, aufweist. Des Weiteren ist es vorteilhaft, wenn das Siebblech runde und/oder polygonförmige Öffnungen umfasst, wobei die Öffnungen einen hydraulischen Durchmesser im Bereich von 0,5 mm bis 2 mm, vorzugsweise von 0,8 mm bis 1,2 mm, aufweisen. Somit weist das Siebblech vorzugsweise eine Lochung mit einem Durchmesser im Bereich von 0,5 mm bis 2 mm, vorzugsweise von 0,8 mm bis 1,2 mm, auf. Wie vorstehend bereits beschrieben hängt der Abstand der Öffnungen meist von dem Durchmesser der Öffnung ab. Als polygonförmige Öffnungen können beispielsweise rechteckige, quadratische, dreieckige und/oder mehreckige, insbesondere fünfeckige, sechseckige bzw. honigwabenförmige, Öffnungen verwendet werden. So kann beispielsweise bei einem Durchmesser von 1,1 mm der Abstand zwischen den Mittelpunkten der Öffnungen und somit die Lochteilung ca. 1 mm bis 3 mm, vorzugsweise 2 mm, betragen. Die vorstehend vorgeschlagene Lochteilung bzw. der vorgeschlagene Durchmesser der Öffnung ist im Gegensatz zum Stand der Technik für das Siebblech sehr fein. Dadurch wird eben kein zusätzliches Maschengewebe mehr benötigt, wodurch dieser Verfahrensschritt entfällt. Somit können die Fertigungskosten reduziert werden. Zudem kann der Durchsatz des Siebblechs optimal ausgestaltet werden. Im Stand der Technik ist dieser Durchsatz aufgrund der zweilagigen Ausgestaltung mit dem Maschengewebe mit ca. 0,3 mm Maschenweite und dem Siebblech mit Öffnungen im Durchmesser ca. 3 mm deutlich geringer.

Ebenso bringt es Vorteile mit sich, wenn der Siebteller eine äußere Befestigungskontur und/oder eine innere Befestigungskontur umfasst. Mit Hilfe der äußeren und/oder der inneren Befestigungskontur kann das Siebblech befestigt werden. Zusätzlich oder alternativ kann mit Hilfe der äußeren und/oder der inneren Befestigungskontur der Siebteller innerhalb der Vorrichtung gelagert und/oder befestigt werden. Die innere Befestigungskontur befestigt den Siebteller vorzugsweise an einer Antriebswelle der Vorrichtung. Die äußere Befestigungskontur ist vorzugsweise derart ausgebildet, dass der Siebteller an dem Behälter der Vorrichtung angelegt werden und/oder vorbeigleiten kann. So kann der Behälter beispielsweise einen Kragen umfassen, an dem sich die äußere Befestigungskontur mittelbar oder unmittelbar abstützen kann.

Vorteilhaft ist es zudem, wenn die Tragstruktur, die äußere Befestigungskontur und/oder die innere Befestigungskontur eine Auflagefläche für das Siebblech aufweist. Mit Hilfe der Auflagefläche liegt die Tragstruktur, die äußere Befestigungskontur und/oder die innere Befestigungskontur unmittelbar oder mittelbar, beispielsweise mittels eines Abstandshalters, am Siebblech an. Dies schafft eine möglichst gleichmäßige bzw. flächige Anlage. Zudem kann mittels der Auflagefläche das Siebblech mit der Tragstruktur, der äußeren Befestigungskontur und/oder der inneren Befestigungskontur, insbesondere verschiebefest, verbunden sein.

Vorteile bringt es mit sich, wenn die Tragstruktur, das Siebblech, die äußere Befestigungskontur und/oder die innere Befestigungskontur, insbesondere unmittelbar, aneinander angeordnet sind und/oder verschiebefest miteinander verbunden sind. So bildet der Siebteller, bestehend aus der Tragstruktur, dem Siebblech, der äußeren Befestigungskontur und/oder der inneren Befestigungskontur eine Einheit aus. Diese Einheit bildet bei möglichst geringem Gewicht eine sehr hohe Steifigkeit aus.

Auch ist es von Vorteil, wenn der Siebteller wenigsten ein Gleitelement zum Anliegen und/oder Vorbeigleiten des Siebtellers an einem Behälter der Vorrichtung umfasst. Wie vorstehend bereits beschrieben, kann der Siebteller an einem Kragen des Behälters abgleiten. Das Gleitelement kann hierfür aus einem für den Anwendungszweck des Gleitens angepassten Werkstoff hergestellt sein. Beispielsweise ist das Gleitelement aus einem Polymer hergestellt. So kann vermieden werden, dass beim Gleiten des Siebtellers am Behälter dieser unbeschädigt bleibt. Zudem kann das Gleitelement bei Beschädigung oder nach einer vorgegebenen Nutzungsdauer vereinfacht ausgetauscht werden.

Vorteilhaft ist es zudem, wenn das Gleitelement an der äußeren Befestigungskontur, vorzugsweise an einer dem Siebblech gegenüberliegenden Seite der äußeren Befestigungskontur, angeordnet ist. Gemäß der vorstehend beschriebenen Abschnittshöhen des wenigstens einen Ringabschnitts und/oder des wenigstens einen Radialabschnitts weist das Gleitelement zusammen mit der äußeren Befestigungskontur vorzugsweise eine konstante Abschnittshöhe im Bereich von 20 mm bis 40 mm, insbesondere 25 mm bis 35 mm, auf. Der äußere Befestigungsabschnitt und das Gleitelement weisen dabei vorzugsweise jeweils eine Abschnittshöhe von 10 mm bis 20 mm, insbesondere 12,5 mm bis 17,5 mm, auf.

Ferner wird eine Vorrichtung zum Entwässern von Schlamm, insbesondere Scheibeneindicker, vorgeschlagen. Die Vorrichtung umfasst einen Siebteller zur Aufnahme des Schlamms und einen Behälter, in dem der Siebteller um eine Drehachse drehbar gelagert ist.

Erfindungsgemäß ist der Siebteller gemäß der vorangegangenen Beschreibung ausgebildet, wobei die genannten Merkmale einzeln oder in beliebiger Kombination vorhanden sein können. Die Vorteile, die sich aus dem vorgeschlagenen Siebteller ergeben, sind der vorangegangenen Beschreibung zu entnehmen. Durch den Einsatz des erfindungsgemäßen Siebtellers in der Vorrichtung ist es zudem vorstellbar, dass aufgrund des verringerten Gewichts und/oder Massenträgheit bei gleichbleibender Steifigkeit ein Antrieb geringere Leistung aufnimmt. Des Weiteren kann durch den höheren Durchsatz des Siebtellers die Produktivität der Vorrichtung erhöht werden.

Des Weiteren wird eine Verwendung eines Siebtellers in einer Vorrichtung zum Entwässern von Schlamm vorgeschlagen. Der Siebteller ist gemäß der vorangegangenen Beschreibung ausgebildet, wobei die genannten Merkmale einzeln oder in beliebiger Kombination vorhanden sein können.

Vorteilhaft ist es, wenn die Vorrichtung zum Entwässern von Schlamm gemäß der vorangegangenen Beschreibung ausgebildet ist, wobei die genannten Merkmale einzeln oder in beliebiger Kombination vorhanden sein können.

Weitere Vorteile der Erfindung sind in den nachfolgenden Ausführungsbeispielen beschrieben. Es zeigt:
- **Figur 1**: eine schematische, teilweise geschnittene Seitenansicht einer Vorrichtung zum Entwässern von Schlamm,
- **Figur 2**: eine perspektivische Darstellung eines Siebtellers,
- **Figur 3**: eine geschnittene Seitenansicht eines Teilbereichs des Siebtellers aus Figur 2, und
- **Figur 4**: eine Detailansicht einer Tragstruktur des Siebtellers aus den Figuren 2 und 3 in perspektivischer Darstellung.

Bei der nachfolgenden Beschreibung der Figuren werden für in den verschiedenen Figuren jeweils identische und/oder zumindest vergleichbare Merkmale gleiche Bezugszeichen verwendet. Die einzelnen Merkmale, deren Ausgestaltung und/oder Wirkweise werden meist nur bei ihrer ersten Erwähnung ausführlich erläutert. Werden einzelne Merkmale nicht nochmals detailliert erläutert, so entspricht deren Ausgestaltung und/oder Wirkweise der Ausgestaltung und Wirkweise der bereits beschriebenen gleichwirkenden oder gleichnamigen Merkmale.

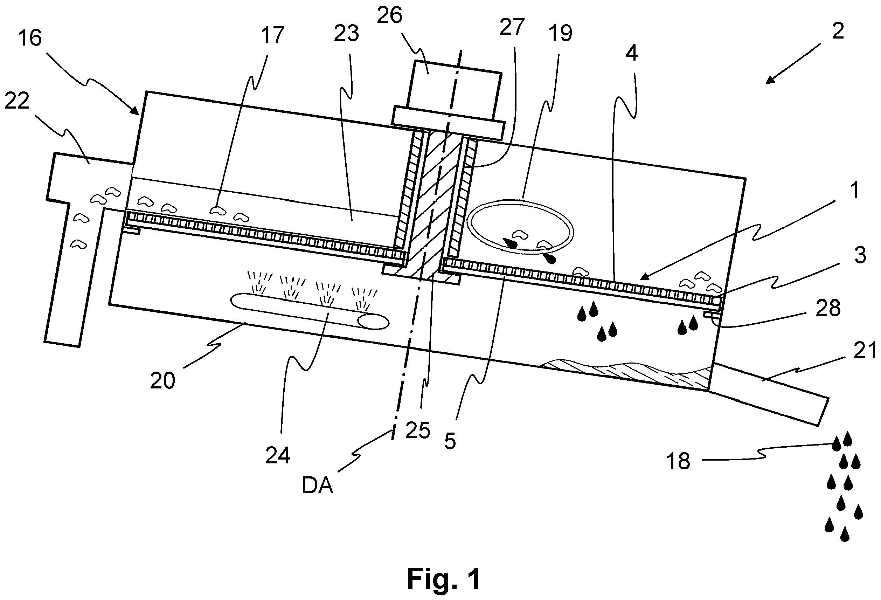

Figur 1 zeigt eine schematische, teilweise geschnittene Seitenansicht einer Vorrichtung 2 zum Entwässern von Schlamm 17. Die Vorrichtung 2 ist im gezeigten Ausführungsbeispiel als Scheibeneindicker ausgebildet. Die Vorrichtung 2 weist einen Siebteller 1 zur Aufnahme des Schlamms 17 und einen Behälter 16 auf, wobei innerhalb des Behälters 16 der Siebteller 1 um eine Drehachse DA drehbar gelagert ist. Der Behälter 16 kann beispielsweise mittels Stützen getragen werden, welche jedoch aus Übersichtsgründen nicht dargestellt sind. Auch kann wenigstens eine der Stützen in der Länge verstellbar sein, so dass die Vorrichtung 2 geneigt werden kann.

Der Behälter 16 umfasst wenigstens einen Einlass 19 für den Schlamm 17. Der durch den Einlass 19 eingebrachte Schlamm 17 weist beim Einbringen eine hohe Feuchtigkeit bzw. hohen Wassergehalt auf. Für eine einfachere Darstellung wurde im Ausführungsbeispiel Schlamm 17 und Flüssigkeit 18 bzw. Wasser separat als einzelne Partikel dargestellt. In Wirklichkeit bilden der Schlamm 17 und die Flüssigkeit 18 bzw. das Wasser sogenannten "feuchten Schlamm" bzw. Dünnschlamm aus.

Nachfolgend wird das Funktionsprinzip der gezeigten, als Scheibeneindicker ausgebildeten, Vorrichtung 2 kurz erklärt. Der Schlamm 17 ist dabei vorzugsweise mit Flockungshilfsmittel konditioniert. Dünnschlamm wird, wie im Stand der Technik bekannt, mit diesen Flockungshilfsmitteln behandelt, um eine bessere Abtrennung von Flüssigkeit 18 aus dem Schlamm 17 zu gewährleisten. Der Schlamm 17, insbesondere der konditionierte Dünnschlamm, wird über den Einlass 19 auf die Oberseite des Siebtellers 1 aufgebracht. Der Siebteller 1 wird in Drehung um die Drehachse DA versetzt, so dass der Schlamm 17, falls er nicht selbständig abfließt, aus dem Bereich des Einlasses 19 wegbefördert wird. Sobald der Schlamm 17 auf dem Siebteller 1 aufgebracht ist, findet eine Entwässerung statt. Hierfür weist der Siebteller 1 ein Siebblech 3 mit Öffnungen 4 auf, durch die die Flüssigkeit 18, bzw. das Wasser im Schlamm 17, infolge der Schwerkraft hindurchströmt.

Die Flüssigkeit 18 wird im Bereich eines Bodens 20 des Behälters 16 aufgefangen und/oder zu einem Auslass 21 abgeleitet. Wie vorstehend bereits beschrieben, kann die Vorrichtung 2 und somit auch der Behälter 16 geneigt sein. Aufgrund der Schrägstellung bzw. Neigung kann die abgetrennte Flüssigkeit 18 durch den niedrig angeordneten Auslass 21 einfach und/oder kontinuierlich abgeleitet werden. Der Schlamm 17 häuft sich aufgrund der Schrägstellung zunächst oberhalb des Siebtellers 1 im Bereich des Auslasses 21 an. Aufgrund der Drehbewegung des Siebtellers 1 wird der Schlamm 17 mitgenommen und lagert sich als Schicht auf dem Siebblech 3 ab. Vom Siebblech 3 wird der Schlamm 17 zu einem Austritt 22 befördert, wobei der entwässerte Schlamm 17 am Austritt 22 aus der Vorrichtung 2 abgeführt wird. Während des gesamten Transportweges des Schlamms 17 wird diesem stetig Flüssigkeit 18 entzogen, die sich unterhalb des Siebteller 1 am Boden 20 des Behälters 16 ansammelt und durch den Auslass 21 ausgeleitet wird.

Während des Transportwegs des Schlamms 17, vom Einlass 19 zum Austritt 22, kann wenigstens eine Walze und/oder eine Schikane (nicht dargestellt) auf den Schlamm 17 komprimierend und/oder umschichtend einwirken, um die Entwässerung zu verbessern. Im Bereich des Austritts 22 weist die Vorrichtung 2 einen Abstreifer 23 auf, mit welchem der entwässerte Schlamm 17 vom Siebblech 3 abgestriffen und/oder in Richtung des Austritts 22 geführt wird. Hierfür kann der Abstreifer 23 beispielsweise eine gebogene Form aufweisen. Zudem ist im gezeigten Ausführungsbeispiel eine optionale Reinigungseinrichtung 24 zwischen dem Abstreifer 23 und dem Einlass 19 angeordnet. Mittels der Reinigungseinrichtung 24 kann das Siebblech 3 nach dem Abtransport des Schlamms 17 gereinigt werden, sodass dieses nicht durch Verschmutzung eingeschränkt ist. Die Reinigungseinrichtung 24 erstreckt sich radial von der Drehachse DA bis zu einer Außenwand des Behälters 16, so dass die gesamte Arbeitsbreite des Siebtellers 1 vor dem Auftragen von neuem Schlamm 17 gereinigt wird.

Um den Siebteller 1 um die Drehachse DA drehbar innerhalb des Behälters 16 zu lagern, weist die Vorrichtung 2 eine Antriebswelle 25 auf. Mittels eines Antriebs 26 kann der Siebteller 1 über die Antriebswelle 25 angetrieben werden. Die Antriebswelle 25 wird von einer Hülse 27 umgeben, die sich selbst nicht dreht, und den Abstreifer 23 ortsfest lagert. Der im Inneren des Behälters 16 angeordnete Siebteller 1 verläuft senkrecht zur Drehachse DA und ist kreisförmig ausgebildet. Der Innendurchmesser des Behälters 16 ist im Wesentlichen gleich dem Außendurchmesser des Siebtellers 1 bzw. des Siebblechs 3. Im Zentrum, also mittig, des Siebtellers 1 wird dieser fest mit der Antriebswelle 25 verbunden. Außenseitig, also am Umfang wird das Siebblech 3 vorzugsweise durch einen Kragen 28 abgestützt.

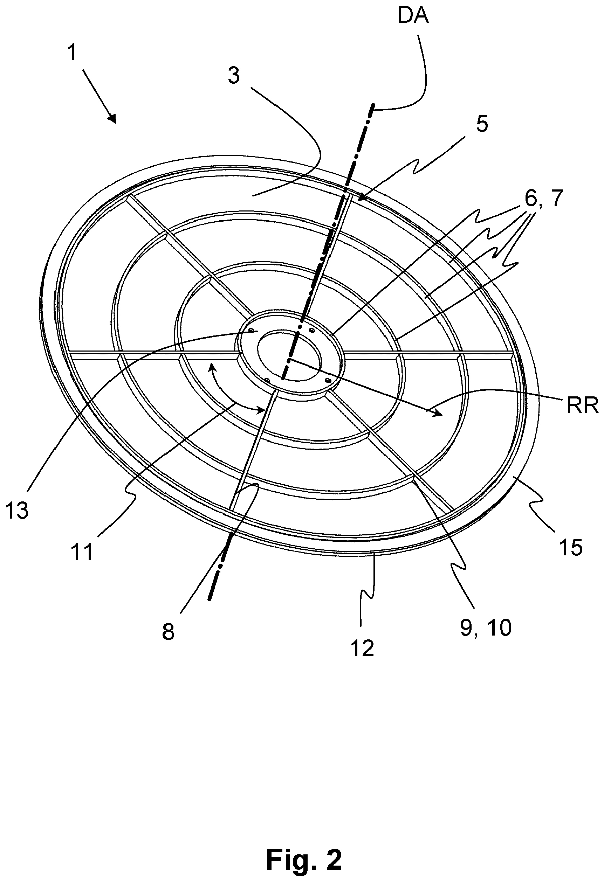

Die vorstehende Beschreibung der Vorrichtung 2 ist beispielhaft für die als Scheibeneindicker ausgebildete Vorrichtung 2 zu verstehen. Ebenfalls ist es denkbar, dass ein erfindungsgemäßer Siebteller 1 in alternativen Vorrichtungen angeordnet ist. Der Siebteller 1 weist im gezeigten Ausführungsbeispiel der Figur 1 eine schematisch dargestellte Tragstruktur 5 zum Tragen und/oder Versteifen des Siebblechs 3 auf. Diese Tragstruktur 5 wird in der folgenden Beschreibung der weiteren Figuren 2 bis 4 näher erläutert.

Figur 2 zeigt eine perspektivische Darstellung eines Siebtellers 1. Der hier gezeigte Siebteller 1 kann beispielsweise in einer Vorrichtung 2 zum Entwässern von Schlamm 17 gemäß dem Ausführungsbeispiel der Figur 1 verwendet werden. Die Figur 2 zeigt dabei den Siebteller 1 in einer perspektivischen Darstellung von unten. So ist die Tragstruktur 5 zum Tragen und/oder Versteifen des Siebblechs 3 zu sehen.

Im gezeigten Ausführungsbeispiel weist die Tragstruktur 5 beispielhaft mehrere Ringabschnitte 6 auf. Es ist ebenso vorstellbar, dass die Tragstruktur 5 lediglich einen der Ringabschnitte 6 umfasst. Jeder der Ringabschnitte 6 bildet im gezeigten Ausführungsbeispiel einen, vorzugsweise umlaufenden, Versteifungsring 7 auf. Es ist ebenso vorstellbar, dass der Versteifungsring 7 aus einer Mehrzahl aneinander angereihter Ringabschnitte 6 gebildet ist. Zudem ist der Versteifungsring 7 im gezeigten Ausführungsbeispiel als Kreis bzw. in Form eines Kreises ausgebildet. Alternativ ist es ebenso vorstellbar, dass der Versteifungsring 7 die Form eines regelmäßigen Polygons aufweist.

Die Ringabschnitte 6 bilden im gezeigten Ausführungsbeispiel mit Hilfe von Radialabschnitten 8 die Tragstruktur 5 aus. So versteift die Tragstruktur 5 mit dem wenigstens einen Radialabschnitt 8 das Siebblech 3 zudem entlang einer Radialrichtung RR des Siebtellers 1. Mit der Mehrzahl an Radialabschnitten 8 und der Mehrzahl an Ringabschnitten 6 ist die Tragstruktur 5 spinnennetzartig ausgebildet. Um eine möglichst gleichmäßige Abstützung des Siebblechs 3 zu gewährleisten, sind im gezeigten Ausführungsbeispiel die mehreren, insbesondere konzentrisch zur Drehachse DA verlaufenden, Versteifungsringe 7 entlang der Radialrichtung RR gleichmäßig voneinander beabstandet. Zusätzlich sind im gezeigten Ausführungsbeispiel die Radialabschnitte 8 gleichmäßig um einen Winkel 11 versetzt zueinander angeordnet. An den Bereichen, an dem der wenigstens eine Ringabschnitt 6 auf den wenigstens einen Radialabschnitt 8 trifft, sind diese, vorzugsweise verschiebefest, miteinander verbunden. Diese Bereiche können Verbindungsabschnitte 9 genannt werden.

Wie vorstehend bereits beschrieben, kann der in Figur 2 dargestellte Siebteller 1 in einer Vorrichtung 2 gemäß der Figur 1 verwendet werden. Zum Befestigen des Siebtellers 1 an der Antriebswelle 25 gemäß der Figur 1 weist der Siebteller 1 des Ausführungsbeispiels der Figur 2 eine innere Befestigungskontur 13 auf. Zusätzlich oder alternativ kann mittels der inneren Befestigungskontur 13 und/oder einer äußeren Befestigungskontur 12 das Siebblech 3 verschiebefest mit der Tragstruktur 5 verbunden werden. Hierfür ist beispielsweise die innere Befestigungskontur 13 und/oder die äußere Befestigungskontur 12 mit der Tragstruktur 5, insbesondere verschiebefest, verbunden. Zusätzlich oder alternativ kann an der äußeren Befestigungskontur 12 ein Gleitelement 15 angeordnet sein, das ausgebildet ist am Kragen 28 des Behälters 16 (siehe Figur 1) vorbeizugleiten.

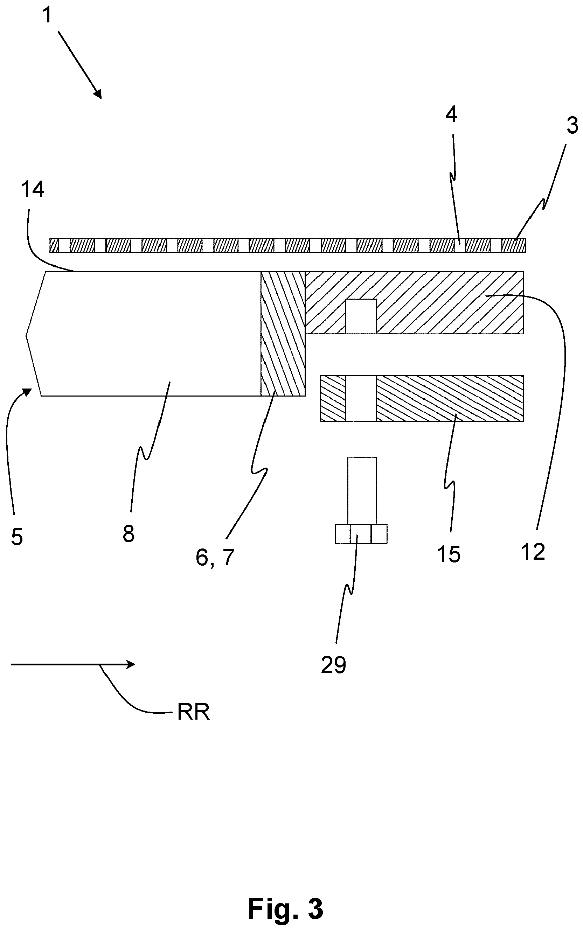

Figur 3 zeigt eine geschnittene Seitenansicht eines Teilbereichs des Siebtellers 1 aus Figur 2. Der Teilbereich beinhaltet die äußere Befestigungskontur 12 sowie den äußersten Versteifungsring 7 und den dazugehörigen Ausschnitt des Siebblechs 3. Zudem ist einer der Radialabschnitte 8 teilweise mit dargestellt.

Die Tragstruktur 5, welche im gezeigten Ausführungsbeispiel den wenigstens einen Ringabschnitt 6 und den wenigstens einen Radialabschnitt 8 umfasst, bildet oberseitig gemeinsam mit der äußeren Befestigungskontur 12 eine Auflagefläche 14 für das Siebblech 3 aus. Ebenfalls ist es vorteilhaft, wenn auch die innere Befestigungskontur 13 einen Teil der Auflagefläche 14 für das Siebblech 3 aufweist. So kann das Siebblech 3 flächig auf der Tragstruktur 5, der äußeren Befestigungskontur 12 und der inneren Befestigungskontur 13 aufliegen und/oder mit diesen, insbesondere verschiebefest, verbunden werden.

Des Weiteren ist in der gezeigten Schnittdarstellung das an der äußeren Befestigungskontur 12 angeordnete Gleitelement 15 detaillierter dargestellt. Das Gleitelement 15 ist mittels eines Befestigungselements 29 mit der äußeren Befestigungskontur 12 verbunden. Hierbei ist das Gleitelement 15 unterseitig der äußeren Befestigungskontur 12 angeordnet. Oberseitig der äußeren Befestigungskontur 12 ist, wie vorstehend bereits beschrieben, die Auflagefläche 14 für das Siebblech 3 angeordnet.

Da das Siebblech 3 erfindungsgemäß durch die Tragstruktur 5 gehalten bzw. gestützt wird, kann dieses eine geringere Steifigkeit aufweisen, als im Stand der Technik bekannt. Die Tragstruktur 5 stellt dabei den Großteil der notwendigen Steifigkeit des Siebtellers 1 bereit. So weist das Siebblech 3 im gezeigten Ausführungsbeispiel runde Öffnungen 4 auf, wobei die Öffnungen 4 einen Durchmesser im Bereich von 0,5 mm bis 2 mm, vorzugsweise von 0,8 mm bis 1,2 mm, aufweisen. Ebenfalls sind polygonförmige Öffnungen 4 denkbar, wobei der hydraulische Durchmesser dieser Öffnungen 4 ähnlich denen von runden Öffnungen 4 ausgebildet sein kann. Die Lochteilung kann beispielsweise im Bereich von 0,5 mm bis 4 mm, vorzugsweise von 1 mm bis 3 mm, gewählt werden kann. Derartige Lochteilungen bzw. Durchmesser der Öffnung 4 führen meist zu einer sehr geringen Steifigkeit des Siebblechs 3. Die notwendige Steifigkeit für den Siebteller 1 kann dabei vornehmlich von der stützenden Tragstruktur 5 eingebracht werden.

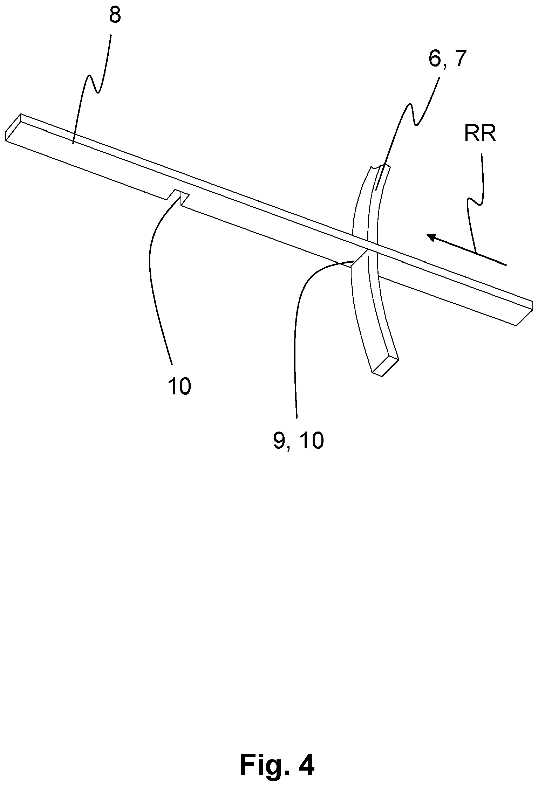

Figur 4 zeigt eine Detailansicht einer Tragstruktur 5 des Siebtellers 1 aus den Figuren 2 und 3 in perspektivischer Darstellung. Hierbei ist lediglich ein Teil der Tragstruktur 5 dargestellt. Dabei zeigt das Ausführungsbeispiel der Figur 4 lediglich einen der Ringabschnitte 6 und einen der Radialabschnitt 8 des Siebblechs 3 gemäß den Figuren 2 und 3.

Wie vorstehend bereits beschrieben, sind der wenigstens eine Ringabschnitt 6 und der wenigstens eine Radialabschnitt 8 im Bereich des Verbindungsabschnitts 9 miteinander verbunden. Vorteilhafterweise weisen der wenigstens eine Ringabschnitt 6 und der wenigstens eine Radialabschnitt 8, wie im gezeigten Ausführungsbeispiel dargestellt, jeweils wenigstens eine korrespondierend ausgebildete Verbindungsaussparung 10 auf. Im Bereich der wenigstens einen Verbindungsaussparung 10 können der wenigstens eine Ringabschnitt 6 und der wenigstens eine Radialabschnitt 8 ineinander eingeschoben werden. Durch das Einschieben und/oder durch einen nachträglichen Fügeprozess kann der wenigstens eine Ringabschnitt 6 und der wenigstens eine Radialabschnitt 8 verschiebefest miteinander verbunden werden.

Die vorliegende Erfindung ist nicht auf die dargestellten und beschriebenen Ausführungsbeispiele beschränkt. Abwandlungen im Rahmen der Patentansprüche sind ebenso möglich wie eine Kombination der Merkmale, auch wenn diese in unterschiedlichen Ausführungsbeispielen dargestellt und beschrieben sind.

### Bezugszeichenliste

- 1: Siebteller
- 2: Vorrichtung
- 3: Siebblech
- 4: Öffnungen
- 5: Tragstruktur
- 6: Ringabschnitt
- 7: Versteifungsring
- 8: Radialabschnitt
- 9: Verbindungsabschnitt
- 10: Verbindungsaussparung
- 11: Winkel
- 12: äußere Befestigungskontur
- 13: innere Befestigungskontur
- 14: Auflagefläche
- 15: Gleitelement
- 16: Behälter
- 17: Schlamm
- 18: Flüssigkeit
- 19: Einlass
- 20: Boden
- 21: Auslass
- 22: Austritt
- 23: Abstreifer
- 24: Reinigungseinrichtung
- 25: Antriebswelle
- 26: Antrieb
- 27: Hülse
- 28: Kragen
- 29: Befestigungselement

- DA: Drehachse
- RR: Radialrichtung

## Patentansprüche

1. Siebteller (1) für eine Vorrichtung (2) zum Entwässern von Schlamm (17),
mit einem Siebblech (3), das eine Vielzahl von Öffnungen (4) für den Durchtritt von Flüssigkeit (18) aufweist und im Wesentlichen kreisförmig ausgebildet ist,
**dadurch gekennzeichnet,**
**dass** der Siebteller (1) eine Tragstruktur (5) zum Tragen und/oder Versteifen des Siebblechs (3) aufweist,
wobei die Tragstruktur (5) wenigstens einen Ringabschnitt (6) umfasst.

2. Siebteller (1) nach dem vorangegangenen Anspruch, **dadurch gekennzeichnet, dass** der wenigstens eine Ringabschnitt (6) oder eine Mehrzahl aneinander angereihte Ringabschnitte (6) wenigstens einen Versteifungsring (7) ausbildet bzw. ausbilden, wobei der Versteifungsring (7) vorzugsweise die Form eines Kreises oder eines regelmäßigen Polygons aufweist und/oder endlos ausgebildet ist.

3. Siebteller (1) nach einem der vorangegangenen Ansprüche, **dadurch gekennzeichnet, dass** der wenigstens eine Ringabschnitt (6) und/oder der wenigstens eine Versteifungsring (7) konzentrisch um eine Drehachse (DA) des Siebtellers (1) verläuft.

4. Siebteller (1) nach einem der vorangegangenen Ansprüche, **dadurch gekennzeichnet, dass** die Tragstruktur (5) wenigstens einen Radialabschnitt (8) umfasst, wobei sich der Radialabschnitt (8), vorzugsweise im Wesentlichen gerade, entlang einer Radialrichtung (RR) des Siebtellers (1) erstreckt.

5. Siebteller (1) nach einem der vorangegangenen Ansprüche, **dadurch gekennzeichnet, dass** der wenigstens eine Ringabschnitt (6) und der wenigstens eine Radialabschnitt (8) an einem Verbindungsabschnitt (9), insbesondere verschiebefest, miteinander verbunden sind, und/oder dass der wenigstens eine Ringabschnitt (6) und der wenigstens eine Radialabschnitt (8) jeweils wenigstens eine korrespondierend ausgebildete Verbindungsaussparung (10) umfassen, so dass der wenigstens eine Ringabschnitt (6) und der wenigstens eine Radialabschnitt (8) im Bereich der korrespondierenden Verbindungsaussparungen (10) ineinander einschiebbar sind und den Verbindungsabschnitt (9) ausbilden.

6. Siebteller (1) nach einem der vorangegangenen Ansprüche, **dadurch gekennzeichnet, dass** die Tragstruktur (5) mehrere Versteifungsringe (7) umfasst, die entlang der Radialrichtung (RR), insbesondere gleichmäßig, voneinander beabstandet sind.

7. Siebteller (1) nach einem der vorangegangenen Ansprüche, **dadurch gekennzeichnet, dass** die Tragstruktur (5) mehrere Radialabschnitte (8) umfasst, wobei die Radialabschnitte (8), vorzugsweise gleichmäßig, um einen Winkel (11) zueinander versetzt angeordnet sind.

8. Siebteller (1) nach einem der vorangegangenen Ansprüche, **dadurch gekennzeichnet, dass** das Siebblech (3) eine Lochteilung im Bereich von 0,5 mm bis 4 mm, vorzugsweise von 1 mm bis 3 mm, aufweist und/oder das Siebblech (3) runde und/oder polygonförmige Öffnungen (4) umfasst, wobei die Öffnungen (4) einen hydraulischen Durchmesser im Bereich von 0,5 mm bis 2 mm, vorzugsweise von 0,8 mm bis 1,2 mm, aufweisen.

9. Siebteller (1) nach einem der vorangegangenen Ansprüche, **dadurch gekennzeichnet, dass** der Siebteller (1) eine äußere Befestigungskontur (12) und/oder eine innere Befestigungskontur (13) umfasst.

10. Siebteller (1) nach einem der vorangegangenen Ansprüche, **dadurch gekennzeichnet, dass** die Tragstruktur (5), die äußere Befestigungskontur (12) und/oder die innere Befestigungskontur (13) eine Auflagefläche (14) für das Siebblech (3) aufweist.

11. Siebteller (1) nach einem der vorangegangenen Ansprüche, **dadurch gekennzeichnet, dass** die Tragstruktur (5), das Siebblech (3), die äußere Befestigungskontur (12) und/oder die innere Befestigungskontur (13), insbesondere unmittelbar, aneinander angeordnet sind und/oder verschiebefest miteinander verbunden sind.

12. Siebteller (1) nach einem der vorangegangenen Ansprüche, **dadurch gekennzeichnet, dass** der Siebteller (1) wenigsten ein Gleitelement (15) zum Anliegen und/oder Vorbeigleiten des Siebtellers (1) an einem Behälter (16) der Vorrichtung (2) umfasst.

13. Siebteller (1) nach einem der vorangegangenen Ansprüche, **dadurch gekennzeichnet, dass** das Gleitelement (15) an der äußeren Befestigungskontur (12), vorzugsweise an einer dem Siebblech (3) gegenüberliegenden Seite der äußeren Befestigungskontur (12), angeordnet ist.

14. Vorrichtung (2) zum Entwässern von Schlamm (17), insbesondere Scheibeneindicker,
mit einem Siebteller (1) zur Aufnahme des Schlamms (17), und
mit einem Behälter (16), in dem der Siebteller (1) um eine Drehachse (DA) drehbar gelagert ist,
**dadurch gekennzeichnet,**
**dass** der Siebteller (1) gemäß einem oder mehreren der vorherigen Ansprüche ausgebildet ist.

15. Verwendung eines Siebtellers (1), der zumindest ein in den vorherigen Ansprüchen 1 bis 13 genanntes und den Siebteller (1) betreffendes Merkmal aufweist, in einer Vorrichtung (2) zum Entwässern von Schlamm (17), insbesondere gemäß dem Anspruch 14.
